# EUROPÄISCHE PATENTANMELDUNG

(11) **EP 1 653 138 A1**
(43) Veröffentlichungstag der Anmeldung: **03.05.2006**
(21) Anmeldenummer: 04025599.4
(22) Anmeldetag: 28.10.2004
(51) Int. Cl.: F16L 23/024, F16L 57/06

(54) **Förderrohr für den Feststofftransport**

(71) Anmelder: Esser-Werke KG, 59581 Warstein (DE)
(72) Erfinder: Esser, Alexander, 59581 Warstein (DE)
(74) Vertreter: Ksoll, Peter

(57) **Zusammenfassung**

Ein Förderrohr (1) für den Feststofftransport weist einen Rohrkörper (2) auf, bestehend aus einem Innenrohr (3) und einem Außenrohr (4). An jedem Rohrende (5,6) des Rohrkörpers (2) ist ein Kupplungsbund (7) an der äußeren Oberfläche (8) des Außenrohrs (4) klebetechnisch festgelegt. Der Kupplungsbund (7) weist an seinem stirnseitigen Ende (11) einen radial einwärts gerichteten umlaufenden Kragen (12) auf, dessen Innendurchmesser (D_{Ki}) kleiner bemessen ist als der Außendurchmesser (D_{Ra}) des Rohrkörpers (2). Auf diese Weise ist eine stabile klebetechnische Fixierung des Kupplungsbunds (7) auf einem Rohrende (5,6) möglich. An dem seinem stirnseitigen Ende (11) abgewandten Bundende (17) weist der Kupplungsbund (7) eine sich von seiner inneren Umfangsfläche nach außen hin erweiternde umlaufende Schrägfläche (18) auf, unter der sich ein Freiraum (24) ausbildet, in dem sich eine Wulst (20) aus Klebstoff ansammelt.

## Beschreibung

Die Erfindung betrifft ein Förderrohr für den Feststofftransport mit einem Rohrkörper, wobei an jedem Rohrende des Rohrkörpers ein Kupplungsbund klebetechnisch festgelegt ist.

Förderrohre zur hydraulischen oder pneumatischen Förderung von Feststoff, wie z.B. Sande, Kiese oder Beton, weisen mindestens innenseitig eine gehärtete Oberfläche auf, um den in der Regel sehr abrasiven Feststoffen einen möglichst hohen Verschleißwiderstand entgegen zu setzen.

Um die Förderrohre zu einem Rohrstrang zusammensetzen zu können, wobei auch ein Austausch einzelner Förderrohre aus dem ansonsten geschlossen bleibenden Rohrstrang durchführbar sein soll, sind die Förderrohre an jedem Ende mit Kupplungsbunden ausgerüstet. Üblicherweise werden die Kupplungsbunde zur Sicherstellung einer zugfesten Verbindung an den Rohrenden der Rohrkörper verschweißt. Das Verschweißen führt jedoch aufgrund der Wärmeeinwirkung immer zu einer unbefriedigenden Härte bzw. nachteiligen Gefügeveränderungen zumindest im Verbindungsbereich, und zwar unabhängig davon, ob es sich um ein- oder doppellagige Förderrohre handelt und ob die Förderrohre vor dem Verschweißen mit den Kupplungsbunden oder nach dem Verschweißen gehärtet werden. Aus diesem Grund werden die Rohrkörper beim Verschweißen der Kupplungsbunde von innen aufwendig wassergekühlt.

Zur Vermeidung der nachteiligen Wärmeeinflüsse aus einem Schweißvorgang ist es durch die DE 196 07 871 C2 bekannt, die Kupplungsbunde mit den Rohrenden von einlagigen Förderrohren zu verkleben. Diese Vorgehensweise konnte sich jedoch bislang in der Praxis nicht durchsetzen, weil bei solchen Förderrohren immer wieder Schäden an der Klebeverbindung und Undichtigkeiten festgestellt wurden. Ursächlich hierfür sind Toleranzunterschiede zwischen den Rohrkörpern und den Kupplungsbunden sowie die Qualität der Klebeverbindung. Die schadhaften Förderrohre müssen ausgetauscht werden mit der Folge von Betriebsunterbrechungen und einer generellen Verringerung der Standzeit.

Der Erfindung liegt ausgehend vom S tand der Technik die Aufgabe zugrunde, e in sowohl herstellungstechnisch als auch für den praktischen Einsatz verbessertes Förderrohr mit einer hohen Standzeit zu schaffen.

Die Lösung dieser Aufgabe besteht nach der Erfindung in einem Förderrohr gemäß den Merkmalen von Patentanspruch 1.

Kernpunkt der Erfindung bildet die Maßnahme, die Kupplungsbunde bei einem Doppellagenrohr, bestehend aus einem Innenrohr und einem Außenrohr klebetechnisch festzulegen, wobei der Kupplungsbund an seinem stirnseitigen Ende einen radial einwärts gerichteten umlaufenden Kragen aufweist, dessen Innendurchmesser kleiner ist als der Außendurchmesser des Rohrkörpers. Vorzugsweise entspricht der Innendurchmesser des Kragens dem Innendurchmesser des Rohrkörpers, so dass ein bündiger Abschluss an den Rohrenden eines Förderrohrs gegeben ist.

Überraschenderweise hat sich gezeigt, dass eine klebetechnische Festlegung der Kupplungsbunde bei Doppellagenrohren möglich ist und für die Praxis Vorteile mit sich bringt, obwohl Innenrohr und Außenrohr nicht stoffschlüssig miteinander verbunden sind. Bislang hat man diesen Gedanken verworfen, weil es im betrieblichen Einsatz der Förderrohre zu einem "Atmen" zwischen Innen- und Außenrohr kommt mit Biegewechselspannungen, infolge derer die Dauerfestigkeit einer Klebeverbindung als nicht praxistauglich angesehen wurde. Dieses Vorurteil überwindet die Erfindung mit einem klebetechnisch festgelegten Kupplungsbund, der mit einem radial einwärts gerichteten umlaufenden Kragen am stirnseitigen Ende Innen- und Außenrohr gegeneinander abstützt. Auf diese Weise ist eine klebetechnische Festlegung der Kupplungsbunde an Doppellagenrohren möglich, so dass die Vorteile eines Doppellagenrohrs genutzt werden können.

Das Förderrohr besteht aus einem hoch verschleißfesten gehärteten Innenrohr und einem druckfesten Außenrohr. Das Innenrohr soll dem zu transportierenden Feststoff einen möglichst langen Verschleißwiderstand entgegensetzen. Das Außenrohr ist gegenüber dem Innenrohr weicher und schlagfester. Dies ist insbesondere im Hinblick auf den Transport sowie die Montage- und Demontagevorgänge von Vorteil, da die Förderrohre üblicherweise einer rauen Handhabung unterworfen sind.

Die Herstellung der Förderrohre ist rationell und kostensparend. Die Verklebung zwischen Kupplungsbund und der äußeren Oberfläche des Außenrohrs erfolgt teil- oder vollflächig und zugfest. Der stirnseitige Kragen bildet einen Anschlag bei der Montage der Kupplungsbunde auf den Enden der Rohrkörper. Vorzugsweise kommt ein aerob aushärtender Mehrkomponentenkleber zur Anwendung. Durch die klebetechnische Festlegung des Kupplungsbundes ohne Wärmeeinfluss werden nachteilige Gefügeveränderungen, Härtesprünge oder Versprödungen im Material des Förderrohrs vermieden. Auf zusätzliche Kühlvorgänge, wie sie beispielsweise bei der schweißtechnischen Festlegung der Kupplungsbunde notwendig sind, kann verzichtet werden. Die Spannungsverteilung im Bereich der Fügeverbindung ist gleichmäßig. Insgesamt werden Betriebsunterbrechungen verringert und die Standzeit des Förderrohrs bzw. eines aus den erfindungsgemäßen Förderrohren zusammengesetzten Rohrstrangs erhöht.

Vorteilhafte Ausgestaltungen und Weiterbildungen des erfindungsgemäßen Förderrohrs sind Gegenstand der abhängigen Ansprüche 2 bis 7.

Dem Außenrohr kommt als Stoß- und Schlagschutz eine Hüllfunktion zu. Hierfür genügt es, das Außenrohr dünnwandig auszuführen. Da die Verbindung der Kupplungsbunde mit dem Außenrohr ohne nachteilige thermische Einflüsse erfolgt und als Fügefläche die gesamte Breite des Kupplungsbundes zur Verfügung steht, kann das Außenrohr im Vergleich zu bisherigen Ausführungen von Doppellagenrohren dünnwandiger ausgelegt werden. Grundsätzlich kann im Rahmen der Erfindung das Verhältnis der Wanddicke des Innenrohrs zur Wanddicke des Außenrohrs in einem Verhältnis zwischen 3,5:1 bis 1,25:1 bemessen sein.

Der Einsatz von Verschleißringen vor den Enden des Rohrkörpers erweist sich im Rahmen der Erfindung generell als vorteilhaft. Die Verschleißringe bestehen aus einem verschleiß- und prallfesten Material, beispielsweise aus einem keramischen Verschleißwerkstoff, Chromkarbid-Guss, aus martensitischem Nickelhartguss oder ähnlichen Verschleißwerkstoffen.

Üblicherweise sind beide Rohrenden eines Förderrohrs mit einem Verschleißring ausgerüstet. Der Verschleißring ist jeweils vor die Stirnseite eines Rohrkörpers gesetzt. Hierbei umgreift der Kupplungsbund den Verschleißring, wobei der Kragen des Kupplungsbunds stirnseitig am Verschleißring anliegt. Die Wanddicke des Verschleißrings entspricht der Wanddicke des Rohrkörpers, so dass der Verschleißring bündig mit dem Rohrkörper abschließt. Ebenso verhält es sich zweckmäßigerweise mit dem Kragen des Kupplungsbunds.

Eine die Klebeverbindung zwischen Kupplungsbund und Ende des Rohrkörpers verbessernde Ausgestaltung sieht vor, dass der Kupplungsbund an dem seiner Stirnseite abgewandten Bundende einen Freiraum an seiner inneren Umfangsfläche aufweist. Vorzugsweise ist der Freiraum konisch bzw. trichterartig ausgebildet. Hierzu ist am inneren Bundende eine sich von der inneren Umfangsfläche des Kupplungsbunds nach außen hin erweiternde Schrägfläche vorgesehen. Der Freiraum erleichtert zunächst den Aufschiebevorgang eines Kupplungsbunds beim Verkleben mit dem Ende des Rohrkörpers. Vorteilhaft ist insbesondere, dass durch die Schrägfläche mit ihrer trichterartigen Kontur der Klebstoff in den Fügespalt zwischen dem Kupplungsbund und der äußeren Oberfläche des Außenrohrs gleitet bzw. hineingezogen und verteilt wird. Eine scharfe Kante, die den Klebstoff abscheren könnte, wird vermieden. Ferner sammelt sich in dem Freiraum zwischen der Schrägfläche und der Oberfläche des Außenrohrs eine Wulst aus Klebstoff auf, die eine zusätzliche Verklebung und Dichtung bewirkt.

Nach einer weiteren vorteilhaften Ausgestaltung der Erfindung weist der Kupplungsbund einen stirnseitigen ersten Längenabschnitt und einen vom Kragen abgewandten in Richtung zur Rohrmitte weisenden zweiten Längenabschnitt auf mit einer dazwischen liegenden Kupplungsnut. Hierbei ist die Dicke des ersten Längenabschnitts kleiner bemessen als die Dicke des zweiten Längenabschnitts. Hierdurch ist sichergestellt, dass beim Transport und Handling der Förderrohre, wenn diese aufeinander gelegt oder abgelegt werden müssen, die Rohrenden geschont werden.

In einer weiteren Ausgestaltung ist vorgesehen, dass vor dem Ende des Rohrkörpers eine Dichtung angeordnet ist, die den Fügespalt zwischen dem Rohrkörper und dem Kupplungsbund abdichtet. Die Dichtung verhindert ein Unterwandern des geklebten Kupplungsbunds durch das im Betrieb unter Druck anstehende Förderfluid. Als Dichtung kann ein Dichtungsring oder eine Dichtungslage aus einem geeigneten Dichtungswerkstoff zum Einsatz gelangen, beispielsweise aus Gummi oder einem Elastomer, die kraftübertragend und dicht in den Verbund aus Rohrkörper und Kupplungsbund eingegliedert ist. Grundsätzlich kann eine Dichtung zwischen dem Rohrende und dem Kragen des Kupplungsbunds ebenso wie zwischen dem Verschleißring und dem Rohrende als auch zwischen dem Kragen und dem Verschleißring angeordnet sein.

Die Erfindung ist nachfolgend anhand von Ausführungsbeispielen näher beschrieben. Es zeigen:
- Figur 1: eine erste Ausführungsform eines erfindungsgemäßen Förderrohrs in einem Längsschnitt;
- Figur 2: in vergrößerter Darstellungsweise den Ausschnitt A der Figur 1;
- Figur 3: einen endseitigen Abschnitt einer zweiten Ausführungsform eines Förderrohrs in der Schnittdarstellung;
- Figur 4: den endseitigen Abschnitt einer dritten Ausführungsform eines Förderrohrs in der Schnittdarstellung und

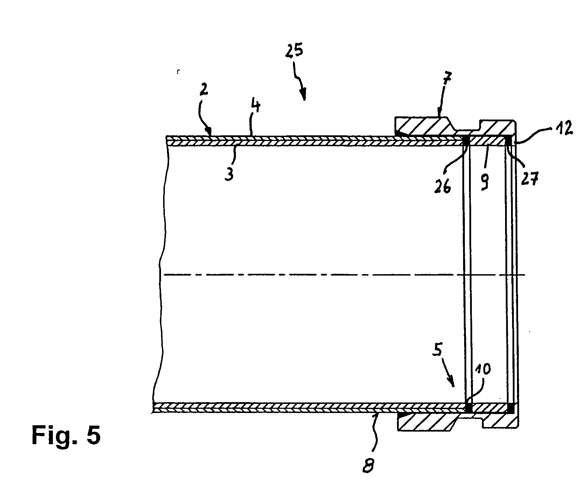

- Figur 5: den endseitigen Ausschnitt einer vierten Ausführungsform eines Förderrohrs in der Schnittdarstellung.

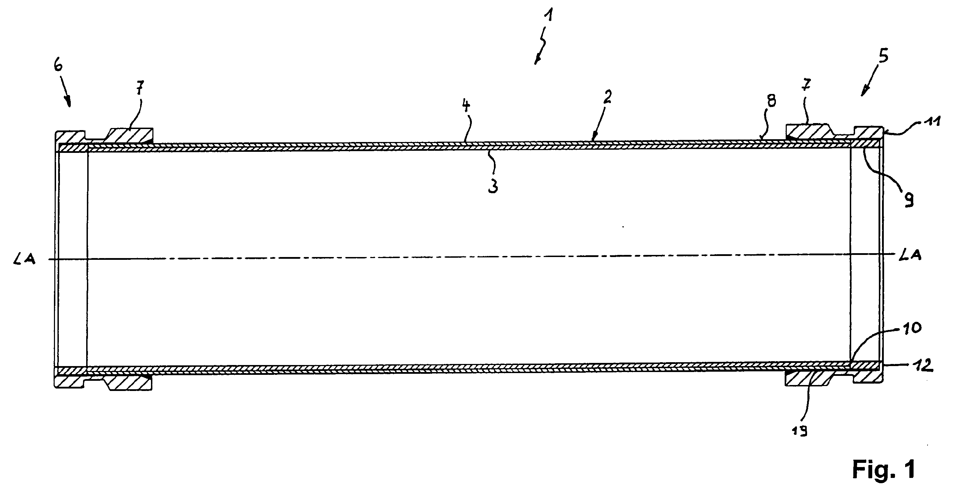

In der Figur 1 ist ein Förderrohr 1 dargestellt mit einem doppellagigen Rohrkörper 2, der aus einem hochverschleißfesten gehärteten Innenrohr 3 und einem druckfesten Außenrohr 4 besteht.

An jedem Rohrende 5 bzw. 6 des Rohrkörpers 2 ist ein Kupplungsbund 7 durch eine Verklebung an der äußeren Oberfläche 8 des Außenrohrs 4 unter Eingliederung eines Verschleißrings 9 festgelegt. Der Verschleißring 9 ist vor die Stirnseite 10 der Rohrenden 5 bzw. 6 gesetzt. Die Wanddicke s₁ des Verschleißrings 9 entspricht der Wanddicke s₂ des Rohrkörpers 2, wobei sich die Wanddicke s₂ aus der Wanddicke s₃ des Innenrohrs 3 und der Wanddicke s₄ des Außenrohrs 4 zusammensetzt. Der Verschleißring 9 schließt so bündig mit dem Rohrkörper 2 ab, wobei er vom Kupplungsbund 7 übergriffen ist.

Am stirnseitigen Ende 11 des Kupplungsbunds 7 ist ein radial einwärts gerichteter umlaufender Kragen 12 vorgesehen. Der Innendurchmesser D_{Ki} des Kragens 12 ist kleiner bemessen als der Außendurchmesser D_{Ra} des Rohrkörpers 2 und entspricht dessen Innendurchmesser D_{Ri}. Die Breite b_{K} des Kragens 12 deckt sich folglich mit der Wanddicke s₁ des Verschleißrings 8 und der Wanddicke s₂ des Rohrkörpers 2.

Der Kupplungsbund 7 ist unter Eingliederung des Verschleißrings 9 auf die Rohrenden 5 bzw. 6 geschoben, bis der Kragen 12 an der Stirnseite 13 des Verschleißrings 9 anliegt und den Verschleißring 9 gegen das Rohrende 5, 6 drückt.

Über an die Kupplungsbunde 7 angreifende hier nicht dargestellte Schellen wird zur Herstellung eines Rohrstrangs die schussweise Kopplung von Förderrohren 1 vorgenommen.

In Rohrlängsachse LA gesehen weist der Kupplungsbund 7 einen stirnseitigen 1. Längenabschnitt 14 und einen in Richtung zur Rohrmitte weisenden 2. Längenabschnitt 15 auf mit einer dazwischen liegenden Kupplungsnut 16. Hierbei ist die Wanddicke s₅ d es 1. Bundabschnitts 14 geringer bemessen als die Wanddicke s₆ des 2. Bundabschnitts 15.

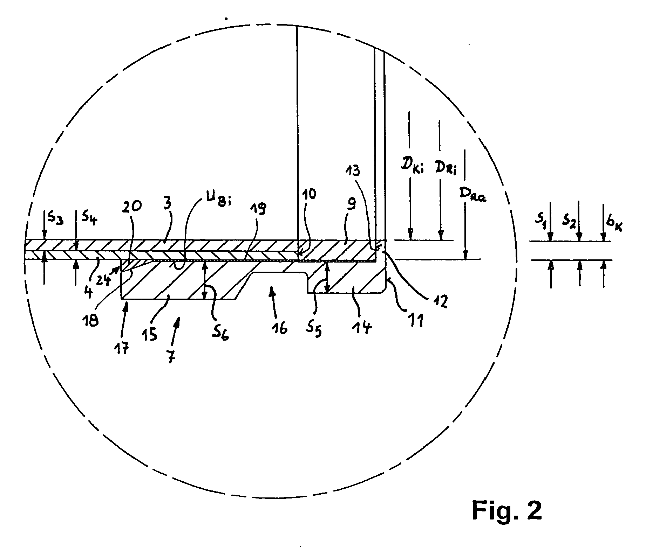

Insbesondere anhand der Darstellung von Figur 2 erkennt man, dass der Kupplungsbund 7 an dem seinem Stirnende 11 abgewandten Bundende 17 eine sich von seiner inneren Umfangsfläche U_{Bi} nach außen hin erweiternde umlaufende Schrägfläche 18 aufweist, so dass am Bundende 17 ein Freiraum 24 ausgebildet ist. Der Freiraum 24 erleichtert den Aufschiebevorgang des Kupplungsbundes 7 auf ein Rohrende 5 bzw. 6. Gleichzeitig wird der auf das Rohrende 5, 6 aufgetragene Klebstoff beim Aufschieben des Kupplungsbunds 7 in den Fügespalt 19 zwischen der inneren Umfangsfläche U_{Bi} des Kupplungsbundes 7 und der äußeren Oberfläche 8 der Enden 5, 6 gedrückt und verteilt. Hierdurch wird eine zugfeste Klebeverbindung sichergestellt. Ein Abscheren des Klebstoffs wird vermieden. Zudem sammelt sich in dem Freiraum 24 zwischen der Schrägfläche 18 und der Oberfläche 8 des Rohrkörpers 5, 6 eine umlaufende Wulst 20 aus Klebstoff an, die eine zusätzliche Verklebung und Dichtung bewirkt.

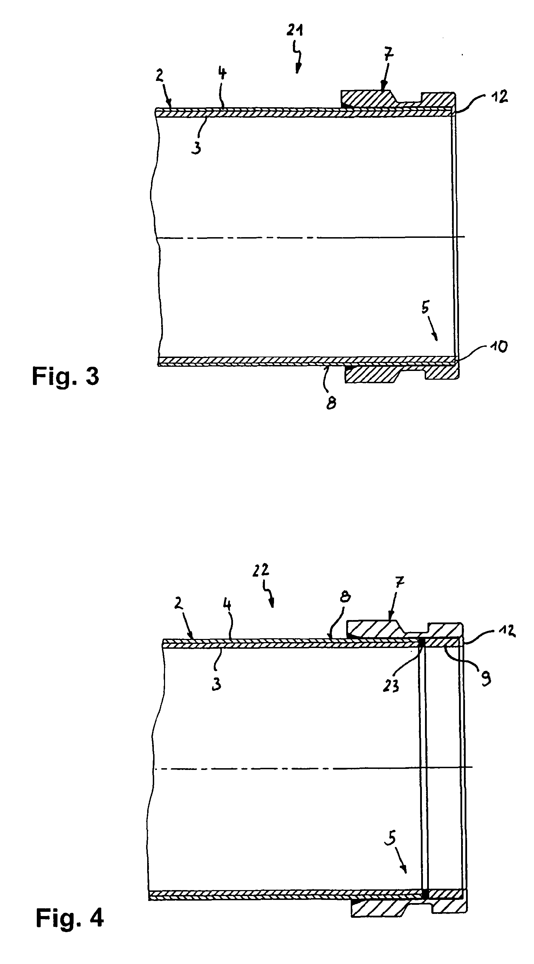

Das Förderrohr 21 wie in der Figur 3 dargestellt entspricht vom doppellagigen Aufbau her grundsätzlich der zuvor beschriebenen Ausführungsform, so dass einander entsprechende Bauteile die gleichen Bezugszeichen tragen. Der Unterschied besteht darin, dass kein Verschleißring vorgesehen ist, so dass der Kupplungsbund 7 mit seinem Kragen 12 an der Stirnseite 10 des Rohrkörpers 2 anliegt und vollflächig mit der äußeren Oberfläche 8 des Außenrohrs 4 verklebt ist.

Bei dem in der Figur 4 dargestellten Förderrohr 22 ist zusätzlich zwischen der Stirnseite 10 des Rohrkörpers 2 und dem Verschleißring 9 eine Dichtung 23 eingegliedert. Ansonsten entspricht das Förderrohr 22 dem Aufbau des Förderrohrs 1. Die Dichtung 23 dichtet den Fügespalt 19 zwischen dem Rohrkörper 2 und dem Kupplungsbund 7 zusätzlich ab, so dass ein Austritt von Fluid über den Fügespalt 19 verhindert wird.

Bei der Ausführungsform eines Förderrohrs 25 ist zwischen der Stirnseite 10 des Rohrkörpers 2 und dem Verschleißring 9 eine Dichtung 26 sowie zwischen dem Verschleißring 9 und dem Kragen 12 eine Dichtung 27 integriert. Der übrige Aufbau des Förderrohrs 25 entspricht dem zuvor beschriebenen.

Durch die klebetechnische Fügung des Kupplungsbunds 7 mit der äußeren Oberfläche 8 des Außenrohrs 4 und dem radial einwärts gerichteten umlaufenden Kragen 12 wird eine zugfeste Verbindung mit hoher Dauerfestigkeit geschaffen ohne thermische Fügung. Dies ermöglicht, die Wanddicke s₄ des Außenrohrs 4 geringer auszulegen als bisher üblich. Demzufolge kann die Wanddicke s₃ des Innenrohrs erhöht werden. Grundsätzlich kann gesagt werden, dass das Verhältnis der Wanddicke s₃ des Innenrohrs 3 zur Wanddicke s₄ des Außenrohrs 4 zwischen 3,5:1 bis 1,25:1 bemessen ist.

### Bezugszeichen:

- 1 -: Förderrohr
- 2 -: Rohrkörper
- 3 -: Innenrohr
- 4 -: Außenrohr
- 5 -: Rohrende v. 2
- 6 -: Rohrende v. 2
- 7 -: Kupplungsbund
- 8 -: äußere Oberfläche v. 4
- 9 -: Verschleißring
- 10 -: Stirnseite v. 5, 6
- 11 -: Stirnende v. 7
- 12 -: Kragen
- 13 -: Stirnseite v. 9
- 14 -: 1. Längenabschnitt
- 15 -: 2. Längenabschnitt
- 16 -: Kupplungsnut
- 17 -: Bundende v. 7
- 18 -: Schrägfläche
- 19 -: Fügespalt
- 20 -: Wulst
- 21 -: Förderrohr
- 22 -: Förderrohr
- 23 -: Dichtung
- 24 -: Freiraum
- 25 -: Förderrohr
- 26 -: Dichtung
- 27 -: Dichtung

- LA -: Rohrlängsachse
- D_{Ki} -: Innendurchmesser v. 12
- D_{Ra} -: Außendurchmesser v. 2
- D_{Ri} -: Innendurchmesser v. 2
- s₁ -: Wanddicke v. 9
- s₂ -: Wanddicke v. 2
- s₃ -: Wanddicke v. 3
- s₄ -: Wanddicke v. 4
- s₅ -: Wanddicke v. 14
- s₆ -: Wanddicke v. 15
- B_{K} -: Breite v. 12
- U_{Bi} -: innere Umfangsfläche v. 7

## Patentansprüche

1. Förderrohr für den Feststofftransport mit einem Rohrkörper (2), wobei an jedem Rohrende (5, 6) des Rohrkörpers (2) ein Kupplungsbund (7) klebetechnisch festgelegt ist, **dadurch gekennzeichnet, dass** der Rohrkörper (2) ein Innenrohr (3) und ein Außenrohr (4) aufweist, wobei der Kupplungsbund (7) mit der äußeren Oberfläche (8) des Außenrohrs (4) verklebt ist und der Kupplungsbund (7) an seinem stirnseitigen Ende (11) einen radial einwärts gerichteten umlaufenden Kragen (12) aufweist, dessen Innendurchmesser (D_{Ki}) kleiner ist als der Außendurchmesser (D_{Ra}) des Rohrkörpers (2).

2. Förderrohr nach Anspruch 1, **dadurch gekennzeichnet, dass** zwischen dem Kragen (12) und der Stirnseite (10) des Rohrkörpers (5, 6) ein Verschleißring (9) eingegliedert ist.

3. Förderrohr nach Anspruch 2, **dadurch gekennzeichnet, dass** die Wanddicke (s₁) des Verschleißringes (9) der Wanddicke (s₂) des Rohrkörpers (2) entspricht.

4. Förderrohr nach wenigstens einem der Ansprüche 1 bis 3, **dadurch gekennzeichnet, dass** der Kupplungsbund (7) an dem seinem Stirnende (11) abgewandten Bundende (17) einen Freiraum (14) an seiner inneren Umfangsfläche (U_{Bi}) aufweist.

5. Förderrohr nach wenigstens einem der Ansprüche 1 bis 4, **dadurch gekennzeichnet, dass** der Kupplungsbund (7) einen stirnseitigen 1. Längenabschnitt (14) und einen in Richtung zur Rohrmitte weisenden 2. Längenabschnitt (15) mit einer dazwischen liegenden Kupplungsnut (16) aufweist, wobei die Dicke (D_{L1}) des 1. Längenabschnitts (14) kleiner bemessen ist als die Dicke (D_{L2}) des 2. Längenabschnitts (15).

6. Förderrohr nach wenigstens einem der Ansprüche 1 bis 5, **dadurch gekennzeichnet, dass** das Verhältnis der Wanddicke (s₃) des Innenrohrs (3) zur Wanddicke (s₄) des Außenrohrs (4) in einem Verhältnis zwischen 3,5 : 1 bis 1,25 : 1 bemessen ist.

7. Förderrohr nach wenigstens einem der Ansprüche 1 bis 6, **dadurch gekennzeichnet, dass** vor dem Rohrkörper (2) eine Dichtung (23, 26, 27) angeordnet ist.

## Geänderte Patentansprüche

### Geänderte Patentansprüche gemäss Regel 86(2) EPÜ.

**1.** Förderrohr für den Feststofftransport mit einem Rohrkörper (2), wobei an jedem Rohrende (5, 6) des Rohrkörpers (2) ein Kupplungsbund klebetechnisch festgelegt ist, **dadurch gekennzeichnet, dass** der Rohrkörper (2) ein Innenrohr (3) und ein Außenrohr (4) aufweist, wobei der Kupplungsbund (7) mit der äußeren Oberfläche des Außenrohrs (4) verklebt ist und der Kupplungsbund (7) an seinem stirnseitigen Ende (11) einen radial einwärts gerichteten umlaufenden Kragen (12) aufweist, dessen Innendurchmesser (D_{Ki}) kleiner ist als der Außendurchmesser (D_{Ra}) des Rohrkörpers (2) und der Kupplungsbund (7) an dem seinem Stirnende (11) abgewandten Bugende (17) einen Freiraum (14) an seiner inneren Umfangsfläche (U_{Bi}) aufweist.

**2.** Förderrohr nach Anspruch 1, **dadurch gekennzeichnet, dass** zwischen dem Kragen (12) und der Stirnseite (10) des Rohrkörpers (5, 6) ein Verschleißring (9) eingegliedert ist.

**3.** Förderrohr nach Anspruch 2, **dadurch gekennzeichnet, dass** die Wanddicke (s₁) des Verschleißringes (9) der Wanddicke (s₂) des Rohrkörpers (2) entspricht.

**4.** Förderrohr nach wenigstens einem der Ansprüche 1 bis 3, **dadurch gekennzeichnet, dass** der Kupplungsbund (7) einen stirnseitigen 1. Längenabschnitt (14) und einen in Richtung zur Rohrmitte weisenden 2. Längenabschnitt (15) mit einer dazwischen liegenden Kupplungsnut (16) aufweist, wobei die Dicke (D_{L1}) des 1. Längenabschnitts (14) kleiner bemessen ist als die Dicke (D_{L2}) des 2. Längenabschnitts (15).

**5.** Förderrohr nach wenigstens einem der Ansprüche 1 bis 4, **dadurch gekennzeichnet, dass** das Verhältnis der Wanddicke (s₃) des Innenrohrs (3) zur Wanddicke (s₄) des Außenrohrs (4) in einem Verhältnis zwischen 3,5 : 1 bis 1,25 : 1 bemessen ist.

**6.** Förderrohr nach wenigstens einem der Ansprüche 1 bis 5, **dadurch gekennzeichnet, dass** vor dem Rohrkörper (2) eine Dichtung (23, 26, 27) angeordnet ist.
